# EUROPÄISCHE PATENTSCHRIFT

(11) **EP 2 310 113 B1**
(45) Veröffentlichungstag und Bekanntmachung des Hinweises auf die Patenterteilung: **24.04.2013**
(21) Anmeldenummer: 09779985.2
(22) Anmeldetag: 26.06.2009
(51) Int. Cl.: B01D 53/94, F01N 3/023, F01N 3/08

(54) **ABGASREINIGUNGSSYSTEM FÜR DIESELMOTOREN VON NUTZKRAFTFAHRZEUGEN**
EXHAUST GAS PURIFICATION SYSTEM FOR DIESEL ENGINES OF COMMERCIAL VEHICLES
SYSTÈME D'ÉPURATION DE GAZ D'ÉCHAPPEMENT POUR DES MOTEURS DIESEL DE VÉHICULES UTILITAIRES

(30) Priorität: 30.07.2008 DE 102008035562
(43) Veröffentlichungstag der Anmeldung: 20.04.2011
(73) Patentinhaber: Emitec Gesellschaft für Emissionstechnologie mbH, 53797 Lohmar (DE)
(72) Erfinder: BRÜCK, Rolf, 51429 Bergisch Gladbach (DE)
(74) Vertreter: Rössler, Matthias
(86) Internationale Anmeldenummer: PCT/EP2009/058071
(87) Internationale Veröffentlichungsnummer: WO 2010/012553

(56) Entgegenhaltungen:
- EP-A- 1 669 563
- WO-A-2004/029423
- WO-A-2004/061278
- WO-A-2006/029808
- DE-A1- 3 337 902
- DE-A1- 10 337 901
- W. MAUS: "Abgasnachbehandlung im Spannungsfeld von Politik und Technik" MOTORTECHNISCHE ZEITSCHRIFT, 30. Juni 2008 (2008-06-30), Seiten 487-492, XP002545439

## Beschreibung

Die Erfindung betrifft ein Abgasreinigungssystem für Dieselmotoren von Nutzkraftfahrzeugen aus einem im Abgasstrang angeordneten Oxidationskatalysator, einer Reduktionsmitteldosiervorrichtung mit einer Reduktionsmitteleinsprühvorrichtung, einer Reduktionsmittelzersetzungsvorrichtung, einem Rußpartikelabscheider, einem Reduktionskatalysator und einem Schalldämpfer.

Besonders bewährt haben sich im Bereich der Abgasbehandlung von mobilen Verbrennungskraftmaschinen als Wabenkörper aufgebaute Katalysatoren und Rußpartikelabscheider, die strukturierte, Kanäle bildende, Trägerelemente (insbesondere metallische Blechfolien, Drahtvliese, etc. oder auch keramische Platten, Extrudate,...) aufweisen, wobei die Strukturen der Trägerelemente mit Mikrostrukturen versehen sein können, die Öffnungen und Strömungsleitflächen bilden, die so gerichtet sind, dass sie Teilströme der Abgase entlang den Trägerelementen von innen nach außen und/oder umgekehrt leiten.

Gerade zur Umsetzung der schädlichen Bestandteile im Abgas der Dieselmotoren kommen unterschiedliche Verfahren zum Einsatz. Zum Beispiel wird zur Reduzierung von Ruß auf gegebenenfalls auf das so genannte "CRT"-Verfahren zurückgegriffen, bei dem mittels im Abgas generierten Stickstoffdioxid eine Umsetzung von Ruß bereits bei tiefen Temperaturen motiviert wird. Ebenfalls kann das so genannte SCR-Verfahren verwirklicht werden, bei dem mittels eines Reduktionsmittels (Harnstoff, Ammoniak,...) die im Abgas enthaltenen Stickoxide reduziert werden. Auch Kombinationen dieser Verfahren wurden bereits vorgeschlagen. Hierfür sind nun auch katalytische Konverter im Abgassystem anzuordnen, wobei gerade bei Nutzfahrzeugen aufgrund der Menge des produzierten Abgasen Platzprobleme bei der Integration von relativ großvolumigen Konvertern auftreten können.

Aus der WO 2006/029808 A1 ist eine Abgasanlage eines Kraftfahrzeugs mit Dieselmotor bekannt, wobei stromaufwärts einer Partikelfiltereinheit ein motornaher Partikelaufnahmespeicher angeordnet ist, der eine Teilmenge der in einem Abgasstrom enthaltenen Partikel bindet und wobei der Partikelaufnahmespeicher aufgrund eines NO₂-Oxidationseffekts im Betrieb wenigstens teilweise regeneriert wird. Bei solchen Abgasanlagen besteht teilweise das Problem, dass diese aufgrund ihres Platzbedarfs nicht in jedem Nutzfahrzeug einsetzbar sind.

Daraus ergibt sich, dass sich die beschriebenen Abgasreinigungssysteme noch verbessern lassen, um das thermische Ansprechverhalten (z.B. nach einem Kaltstart) zu verbessern und um eine möglichst hohe Abgasreinigungsrate über einen langen Zeitraum zu erzielen. Des Weiteren ist eine Anpassung des Abgasreinigungssystems für Dieselmotoren von Nutzkraftfahrzeugen an die gegebenen Platzverhältnisse unter Berücksichtigung der Notwendigkeit, einen voluminösen Abgasschalldämpfer vorzusehen, um den einschlägigen gesetzlichen Bestimmungen zu genügen, anzustreben.

Dementsprechend liegt der Erfindung die Aufgabe zugrunde, die mit Bezug auf den Stand der Technik geschilderten Probleme zumindest teilweise zu lösen. Insbesondere sollen Parameter und konstruktive Details eines Abgasreinigungssystems für Dieselmotoren von Nutzkraftfahrzeugen angegeben werden, mit denen eine effiziente Abgasreinigung erreichbar ist, das einfach und kostengünstig aufgebaut ist und eine platzsparende Anordnung zulässt.

Die Aufgaben werden gelöst mit einem Dieselmotor gemäß den Merkmalen des Patentanspruchs 1. Weitere vorteilhafte Ausgestaltungen der Erfindung sind in den abhängig formulierten Patentansprüchen angegeben. Es ist darauf hinzuweisen, dass sich die in den abhängig formulierten Patentansprüchen einzeln aufgeführten Merkmale in beliebiger, technologisch sinnvoller Weise miteinander kombinieren lassen und weitere Ausgestaltungen der Erfindung definieren. Darüber hinaus werden die in den Patentansprüchen angegebenen Merkmale in der Beschreibung näher präzisiert und erläutert, wo weitere bevorzugte Ausführungsbeispiele der Erfindung dargestellt werden.

Vorliegend wir die Aufgabe durch einen Dieselmotor für ein Nutzkraftfahrzeug mit einem Abgasreinigungssystem aus einem im Abgasstrang angeordneten Oxidationskatalysator, einer Reduktionsmitteldosiervorrichtung mit einer Reduktionsmitteleinsprühvorrichtung, einer Reduktionsmittelzersetzungsvorrichtung, einem Rußpartikelabscheider, einem Reduktionskatalysator und einem Schalldämpfer für die Abgase sowie insbesondere einen Abgasturbolader gelöst, wobei der Oxidationskatalysator zwischen einem minimalen Abstand unmittelbar nach den Auslassventilen des Motors bis zu einem maximalen Abstand von 0,75 m, vorzugsweise weniger als 0,5 m, von einem Abgassammelrohr oder einem Abgasturbinenauslass angeordnet ist, dadurch gekennzeichnet, dass die Reduktionsmittelzersetzungsvorrichtung, der Rußpartikelabscheider sowie der Reduktionskatalysator davon getrennt in dem Schalldämpfer angeordnet sind. Unter einem Abgassammelrohr ist die Verbindung zwischen den Zylinderauslässen des Dieselmotors zu einem Abgasrohr zu verstehen.

Je kürzer dieser vorgenannte Abstand ist, desto heißer sind die in den Oxidationskatalysator eintretenden Abgase, so dass die Umsetzung der in dem Abgas enthaltenen Schadstoffe nahezu unverzüglich nach dem Start des Motors erfolgt. Mit der erfindungsgemäßen Anordnung und der Ausbildung der Elemente des Abgasreinigungssystems wird bereits nach wenigen Sekunden die Umsetzung der Schadstoffe mit einer mindestens 98%igen Effektivität erreicht.

Die günstigste Anordnung des Oxidationskatalysators ist, wenn dieser unterteilt wird und unmittelbar nach den Auslassventilen eines jedes Zylinders des Motors angeordnet wird. Da dies aus baulichen Gründen nicht immer möglich ist und das erfindungsgemäße Abgasreinigungssystem auch als Nachrüstsystem für vorhandene Dieselmotoren verwendbar sein soll, ist eine Anordnung mit einem maximalen Abstand von 0,75 m, vorzugsweise weniger als 0,5 m, von einem Abgassammelrohr eines Dieselmotors ohne Abgasturbolader oder von einem Abgasturbinenauslass eines Dieselmotors mit Abgasturbolader auch noch vorteilhaft, insbesondere wenn eine Wärmeisolierung einer Rohrverbindung vom Abgassammelrohr oder vom Abgasturbinenauslass zum Oxidationskatalysator und/oder vom Oxidationskatalysator zum Abgasschalldämpfer vorgesehen wird.

In allen Fällen ist es für eine den räumlichen Gegebenheiten eines Nutzkraftfahrzeuges angepasste Bauweise wichtig, dass der Oxidationskatalysator getrennt von den übrigen Elementen des Abgasreinigungssystems, der Reduktionsmitteldosiervorrichtung, der Reduktionsmitteleinsprühvorrichtung, der Reduktionsmittelzersetzungsvorrichtung, dem Rußpartikelabscheider, dem Reduktionskatalysator und dem Schalldämpfer getrennt angeordnet ist.

Der Oxidationskatalysator dient dazu, im Abgas enthaltene, unverbrannte Kohlenwasserstoffe und Kohlenmonoxid zu Wasser und Kohlendioxid zu oxidieren und im Abgas enthaltene Stickoxide zu NO₂ aufzuoxidieren.

Mittels einer Reduktionsmitteldosiervorrichtung wird ein Reduktionsmittel über eine Reduktionsmitteleinsprühvorrichtung in die Abgase eingebracht, wobei als Reduktionsmittel in erster Linie Harnstoff eingesprüht wird, der in der Reduktionsmittelzersetzungsvorrichtung zu Ammoniak zersetzt wird. Dabei kann die Reduktionsmitteleinsprühvorrichtung in unmittelbarer Nähe (dann bevorzugt stromabwärts) zum Oxidationskatalysator oder (stromaufwärts) zur Reduktionsmittelzersetzungsvorrichtung positioniert werden.

Im Rußpartikelabscheider werden die am Dieselmotorprozess entstehenden Rußpartikel ausgefiltert und zu Kohlendioxid oxidiert. Der Rußpartikelabscheider ist bevorzugt als so genannter Nebenstromfilter ausgeführt, bei dem keine Strömungssackgassen vorgesehen sind. Ganz besonders bevorzugt ist, dass der Partikelabscheider mit metallischen Folien und metallischen Drahtvliesen aufgebaut ist.

Der Reduktionskatalysator dient schließlich dazu, die Stickoxide mit Hilfe des Reduktionsmittels zu Stickstoff und Wasserdampf zu reduzieren. Ganz besonders bevorzugt wird hierfür eine keramische Trägerstruktur eingesetzt.

Klar ist, dass aufgrund der beachtlichen Menge des zu behandelnden Abgases die hier angesprochenen Komponenten auch mehrfach vorgesehen sein können, insbesondere mit mehreren Anordnungen nebeneinander (parallel) und/oder hintereinander (in Serie). Das gilt neben den Konvertern insbesondere auch für die Abgasleitung und/oder Reduktionsmitteleinsprühvorrichtung.

In Weiterbildung der Erfindung wird vorgeschlagen, eine Wärmeisolierung einer Rohrverbindung vom Abgassammelrohr oder, falls ein Abgasturbolader vorgesehen ist, vom Abgasturbinenauslass zum Oxidationskatalysator und/oder vom Oxidationskatalysator zum Abgasschalldämpfer vorzusehen, um Wärmeverluste in der Abgasleitung zu vermeiden. Mit einer Wärmeisolierung ist zum Beispiel eine Außenummantelung oder eine Innenauskleidung eines Abgasrohres mit wärmeisolierendem Material gemeint, das beispielsweise aus einem wenig wärmeleitenden Material, beispielsweise Mineralwolle, besteht und einen Wärmeübergang von den Abgasen zum Abgasrohr erheblich vermindert.

In Weiterbildung dieser Maßnahme wird vorgeschlagen, im Bereich der Reduktionsmitteleinsprühvorrichtung eine Innenisolation vorzusehen, die vorzugsweise aus einem zum Abgasrohr beabstandet angeordneten Innenrohr besteht, wobei das Innenrohr beispielsweise mit nach außen geprägten Noppen als Abstandshalter versehen sein kann.

Um dieses Innenrohr durch die Abgase nach einem Kaltstart schnell auf eine erhöhte Temperatur zu bringen, weist dieses Innenrohr eine geringe oberflächenspezifische Wärmekapazität auf, indem es mit einer Wandstärke von nur 0,3 bis 0,5 mm ausgebildet ist.

Ist der Abstand der Reduktionsmitteleinsprühvorrichtung vom Motor aus baulichen Gründen relativ groß, so dass die Erwärmung durch die Abgase nach einem Kaltstart nur mit einer Zeitverzögerung erfolgt, kann (zum Beispiel im Bereich der Innenisolation) eine (aktivierbare, regelbare) Heizvorrichtung angeordnet sein, die vorzugsweise als elektrische Heizvorrichtung ausgebildet sein kann. Diese elektrische Heizvorrichtung kann bei Kaltstart und/oder Reduktionsmittelzugabe automatisch eingeschaltet werden und schaltet sich gegebenenfalls nach Erreichen einer vorgegebenen Temperatur wieder automatisch ab. Die Heizvorrichtung kann vorzugsweise aus Wicklung eines Heizwiderstandes bestehen, jedoch ist es auch möglich, die Heizwirkung durch die Einspritzung von Kraftstoff und seiner anschließenden Verbrennung zu erzielen.

Nach einer besonders bevorzugten Ausführungsform der Erfindung weisen der Oxidationskatalysator und/oder die Reduktionsmittelzersetzungsvorrichtung und/oder der Rußpartikelabscheider und/oder der Reduktionskatalysator strukturierte, Kanäle bildende Trägerelemente auf. Die Strukturen der Trägerelemente können dabei mit Mikrostrukturen versehen sein, die Öffnungen und Strömungsleitflächen bilden, die so gerichtet sind, dass sie Teilströme der Abgase entlang den Trägerelementen von innen nach außen und/oder umgekehrt leiten. Hierdurch wird eine Vergleichmäßigung der Strömungsgeschwindigkeit über den Querschnitt der vorher erwähnten Bauelemente, eine Durchmischung der Teilströme und eine Auflösung von Laminarströmungen erreicht, wodurch die Wirksamkeit der Elemente des Abgasreinigungssystems erheblich erhöht wird.

Eine günstige Anordnung und eine abgestimmte Wirksamkeit der einzelnen Elemente eines Abgasreinigungssystems wird erreicht, wenn der Querschnitt des Oxidationskatalysators etwa 30 bis 80 %, vorzugsweise 50 bis 70 % des Querschnitts des Rußpartikelabscheiders und/oder des Reduktionskatalysators beträgt. Außerdem kann es sinnvoll sein, wenn die Zelldichte, das heißt die Anzahl der Kanäle pro Quadratzentimeter, im Oxidationskatalysator bei 15 bis 60, vorzugsweise 30 bis 45 und im Reduktionskatalysator bei 30 bis 90, vorzugsweise 45 bis 60, liegt. Der Querschnitt des Oxidationskatalysators, des Rußpartikelabscheiders und des Reduktionskatalysators ist der Querschnitt des Gehäuses, in dem die Trägerelemente der Katalysatoren angeordnet sind. Die Zelldicht definiert die Anzahl der Kanäle pro cm2 bezogen auf die Katalysatorquerschnittsfläche.

Die Umsetzung der Stickoxide im Reduktionskatalysator mit Hilfe des Reduktionsmittels lässt sich weiter steigern, wenn der Reduktionskatalysator aus einem ersten Teil mit einer Hochtemperatur-Katalytbeschichtung und einem nachgeschalteten zweiten Teil mit einer Niedertemperatur-Katalytbeschichtung besteht. Hierbei ist der Reduktionskatalysator körperlich in einen ersten und einen zweiten Teil unterteilt. Diese Unterteilung lässt sich vermeiden, wenn der Reduktionskatalysator eine Zonenbeschichtung mit einem Hochtemperatur- und Niedertemperaturkatalysatoren auf gemeinsamen Trägerelementen aufweist. Unter einer Hochtemperatur-Katalytbeschichtung und einer Niedertemperatur-Katalytbeschichtung sind Beschichtungen zu verstehen, die vorzugsweise bei hohen Temperaturen bzw. bei niedrigen Temperaturen besonders aktiv sind. Eine Zonenbeschichtung ist gegeben, wenn die Trägerelemente in einem Katalysatorgehäuse entweder in der Hauptströmungsrichtung oder quer zur Hauptströmungsrichtung unterschiedlich beschichtet sind.

Eine räumlich günstige Anordnung lässt sich erreichen, wenn die Reduktionsmittelzersetzungsvorrichtung und/oder der Reduktionskatalysator mit dem Rußpartikelabscheider durch wenigstens teilweise Beschichtung der Rußpartikelabscheiderelemente mit einem Hydrolysekatalyten und/oder mit einem Reduktionskatalyten zu einer Einheit zusammengefasst sind. Diese Einheit lässt sich vorteilhafterweise in den Abgasschalldämpfer integrieren. Unter zu einer Einheit zusammengefassten Elementen des Abgasreinigungssystems ist zu verstehen, dass sie in einem gemeinsamen Gehäuse angeordnet sind. Ein Hydrolysekatalyt bewirkt die Zersetzung des als Reduktionsmittel eingesetzten Harnstoffs in Ammoniak und Wasserdampf. Mit einem Reduktionskatalyten sind Trägerelemente des Reduktionskatalysators beschichtet, der die Reduktion der Stickoxide mit Hilfe von Ammoniak in Stickstoff und Wasserdampf bewirkt.

Eine weiter integrierte Baueinheit lässt sich dadurch realisieren, dass die Reduktionsmitteleinspritzvorrichtung, die Reduktionsmittelzersetzungsvorrichtung, der Rußpartikelabscheider und der Reduktionskatalysator in dem Abgasschalldämpfer angeordnet sind, vorausgesetzt die dadurch bedingte Volumenvergrößerung des Abgasschalldämpfer lässt sich am bzw. im Nutzkraftfahrzeug unterbringen.

Zur Steigerung der katalytischen Wirksamkeit weist wenigstens der Oxidationskatalysator und/oder die Reduktionsmittelzersetzungsvorrichtung und/oder der Rußpartikelabscheider und/oder der Reduktionskatalysator einen Katalysatorträger mit einer Washcoat-Beschichtung auf, der durch seine Struktur die Oberfläche vergrößert und zusätzliche Stoffe enthalten kann, die die Aktivität der Katalysatoren erhöhen, wobei für die Washcoat-Beschichtung eine Menge von 10 bis 60 g/l Katalysatorvolumen, vorzugsweise 25 bis 40 g/l Katalysatorvolumen, vorgesehen sein können. Eine Washcoat-Beschichtung ist eine poröse Oxidschicht, vorzugsweise Aluminiumoxid, die auf den monolithischen Katalysatorträger aufgebracht wird. Der Washcoat vergrößert durch seine Struktur die Oberfläche. Er wird mit den katalytisch aktiven Stoffen überzogen und enthält zur Steigerung der katalytischen Wirksamkeit zusätzliche Stoffe, so genannte Promotoren, die die Aktivität der Katalyten erhöhen.

Der Einbringungsort des Reduktionsmittels in das Abgas liegt vorzugsweise in Strömungsrichtung vor dem Rußpartikelabscheider und stets nach dem Oxidationskatalysator.

Wenn die Elemente des Abgasreinigungssystems außer dem Oxidationskatalysator im Abgasschalldämpfer integriert sind, lässt sich das Reduktionsmittel direkt in den Abgasschalldämpfer, vorzugsweise etwa koaxial zu einer Mittelachse des (vorteilhafter Weise mit einem Hydrolysekatalyt (teilweise) beschichteten) Rußpartikelabscheiders eindüsen.

Alternativ und/oder in Kombination dazu ist auch möglich, dass das Reduktionsmittel in das Abgasrohr vor dem Abgasschalldämpfer eingedüst eindüsbar ist. Dabei ist bevorzugt, dass so eingedüst wird, dass das Reduktionsmittel entgegen einer Strömungsrichtung des Abgases eine Rückseite des Trägers für den Oxidationskatalysator erreicht. Im Fall, dass die Reduktionsmitteleinsprühvorrichtung in unmittelbarer Nähe stromabwärts zum Oxidationskatalysator angeordnet ist wird vorgeschlagen, dass die Reduktionsmitteleinsprühvorrichtung das Reduktionsmittel auf den Träger des Oxidationskatalysators aufgibt, also entgegen der Strömungsrichtung des Abgases. Der Teil des Trägers kann dann z.B. katalytisch inaktiv oder mit einer Reduktionsmittelzersetzungsbeschichtung ausgeführt sein. So kann die Zersetzung bzw. Verdampfung des Reduktionsmittels im heißeren Teil der Abgasanlage schnell erreicht werden und eine Durchmischung mit dem Abgas ist auch über den langen gemeinsamen Strömungspfad bis hin zur Reduktionsmittelzersetzungsvorrichtung im Abgasschalldämpfer gewährleistet.

Die Erfindung sowie das technische Umfeld werden nachfolgend anhand der Figuren näher erläutert. Es ist darauf hinzuweisen, dass die Figuren besonders bevorzugte Ausführungsvarianten der Erfindung zeigen, auf diese jedoch nicht beschränkt ist. Es zeigen schematisch:
- Fig. 1:: eine erste Ausführungsform eines erfindungsgemäßen Abgasreinigungssystems,
- Fig. 2:: eine Ausführungsvariante des Abgasreinigungssystems gemäß Figur 1,
- Fig. 3:: eine weitere Ausführungsvariante des erfindungsgemäßen Abgasreinigungssystems,
- Fig. 4:: eine teilweise Schnittansicht eines mit einer Innenisolierung versehenen Abgasrohrs, und
- Fig. 5: eine Detailansicht einer eines Oxidationskatalysators mit rückseitiger Reduktionsmittelzugabe.

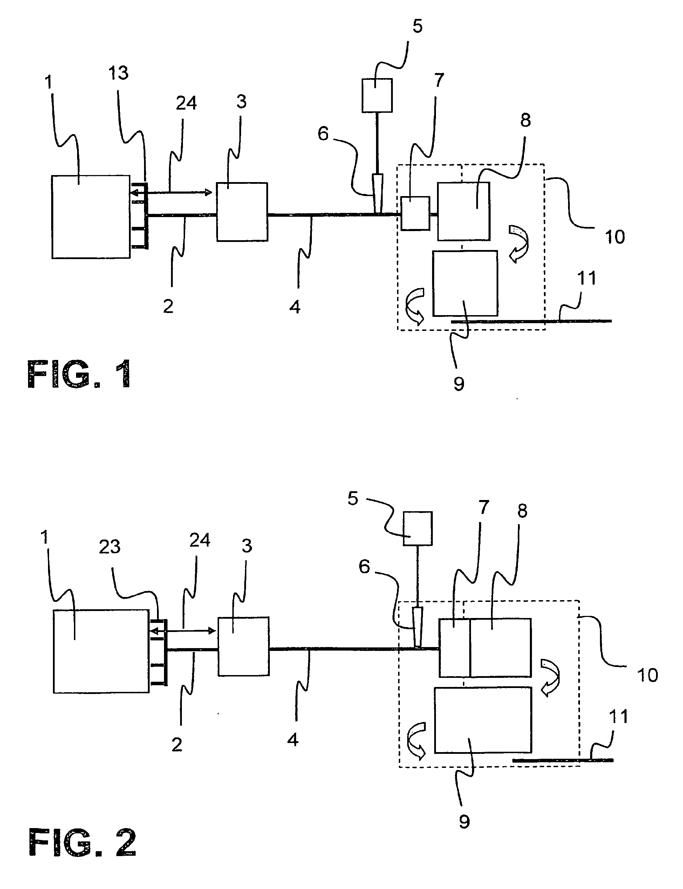

Das Abgasreinigungssystem gemäß den Fig. 1 bis 3 ist für Dieselmotoren von Nutzkraftfahrzeugen bestimmt, insbesondere für Lastkraftwagen, Busse oder aber auch Fahrzeuge zur See bzw. zur Luft. Die Leistungsanforderung an die Nutzkraftfahrzeuge dieser Größe ist bei gleichzeitig möglichst niedrigem Verbrauch hoch. Dementsprechend bewegt sich der Hubraum derartiger Dieselmotoren für Nutzkraftfahrzeug im Bereich zum Beispiel zwischen 6 und 12 Liter oder sogar noch darüber. Diese Dieselmotoren sind zur Leistungssteigerung und Verminderung des spezifischen Verbrauchs in der Regel mit einem Abgasturbolader versehen. Unter einem Abgasturbolader ist die Kombination einer von Abgasen des Dieselmotors beaufschlagten Abgasturbine mit einem von der Abgasturbine angetriebenen Turboverdichter zu verstehen. Durch den Turboverdichter wird die Ansaugluft des Dieselmotors auf einen erhöhten Ladedruck gebracht, wodurch eine größere Luftmasse in den Motor gelangt und für die Verbrennung einer größeren Kraftstoffmenge zur Verfügung steht.

Bei der Kraftstoffverbrennung in den einzelnen Zylindern eines Dieselmotors entstehen in erster Linie Kohlendioxid und Wasserdampf, jedoch ist die Verbrennung nicht ganz vollständig, so dass in den Abgasen unverbrannte Kohlenwasserstoffverbindungen, Kohlenmonoxid, Ruß und aufgrund der hohen Verbrennungstemperaturen Stickoxide vorhanden sind, die mittels des erfindungsgemäßen Abgasreinigungssystems möglichst weitgehend aus den Abgasen entfernt werden sollen.

Der Dieselmotor 1 gemäß Fig. 1 weist keinen Abgasturbolader auf, sondern von einem mit jedem Zylinder verbundenen Abgassammelrohr 13 gelangen die Abgase in ein erstes Abgasrohr 2 und von dort in einen Oxidationskatalysator 3. Der mit einem Doppelpfeil bezeichnete Abstand 24 zwischen dem Abgassammelrohr 13 und dem Oxidationskatalysator 3 beträgt höchstens 0,7 m, vorzugsweise weniger als 0,5 m, damit die aus dem Abgassammelrohr 13 austretenden Abgase möglichst heiß in den Oxidationskatalysator 3 gelangen. Im Oxidationskatalysator 3 werden die unverbrannten, gasförmigen Bestandteile der Abgase zu Wasserdampf und Kohlendioxid oxidiert. Des Weiteren wird ein möglichst großer Anteil der Stickoxide in den Abgasen zu Stickstoffdioxid (NO₂) aufoxidiert.

Vom Oxidationskatalysator 3 gelangen die Abgase über ein zweites Abgasrohr 4 in einen Schalldämpfer 10. Unter einem Schalldämpfer wird vorliegend ein Gehäuse für das Abgas verstanden, in dem eine Mehrzahl von Trägerkörpern angeordnet ist und wobei das Abgas mehrmals "relativ frei strömend" umgelenkt wird (siehe auch Pfeile in den Figuren). Bei dem Ausführungsbeispiel gemäß Fig. 1 wird ein Reduktionsmittel, vorzugsweise Harnstoff, mittels einer Reduktionsmitteldosiervorrichtung 5 über eine Reduktionsmitteleinsprühvorrichtung 6 in das Abgasrohr 4 eingedüst und gelangt zusammen mit den Abgasen in eine im Schalldämpfer 10 angeordnete Reduktionsmittelzersetzungsvorrichtung 7, in der der Harnstoff katalytisch in Wasserdampf und Ammoniak (NH₃) umgewandelt wird. Im Schalldämpfer 10 ist der Reduktionsmittelzersetzungsvorrichtung 7 ein Rußpartikelabscheider 8 nachgeschaltet, in dem ein möglichst großer Anteil der in den Abgas enthaltenen Rußpartikel aufgefangen und verbrannt wird. Vom Rußpartikelabscheider 8 gelangen die Abgase über eine Leitung in einen Reduktionskatalysator 9, in dem die Stickoxide katalytisch zu Stickstoff und Wasserdampf reduziert werden. Gegebenenfalls kann dem Reduktionskatalysator 9 noch eine nicht dargestellte Fangeinrichtung für überschüssigen Ammoniak nachgeschaltet sein. Die aus dem Reduktionskatalysator 9 austretenden und in das Innere des Schalldämpfers 10 eintretenden Abgase verlassen den Schalldämpfer 10 schallgedämpft über ein Auspuffrohr 11.

Die Ausführungsform gemäß Fig. 2 unterscheidet sich von der gemäß Fig. 1 dadurch, dass der Dieselmotor 1 mit einem Abgasturbolader 23 versehen ist und dementsprechend ein Abstand 24 von maximal 0,75 m, vorzugsweise weniger 05, m zwischen dem Abgasturbinenauslass und dem Oxidationskatalysator 3 vorgesehen ist. Des Weiteren ist die Reduktionsmitteleinsprühvorrichtung 6 innerhalb des Schalldämpfers 10 angeordnet und ist die Reduktionsmittelzersetzungsvorrichtung 7 in den Rußpartikelabscheider 8 integriert. Hierdurch wird eine kompakte Bauweise des Schalldämpfers 10 erreicht.

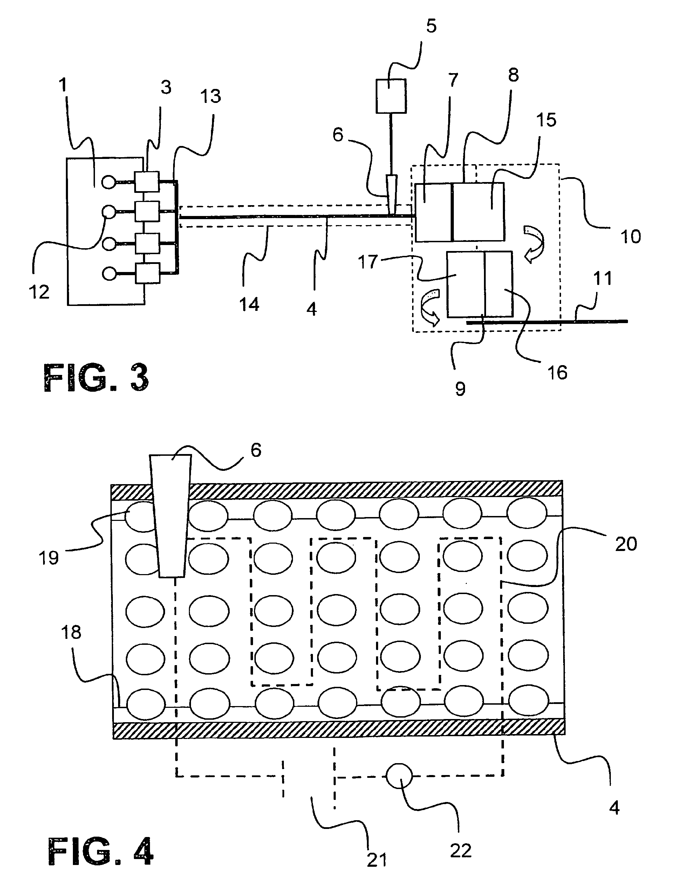

Die Ausführungsform gemäß Fig. 3 weist einen Dieselmotor 1 mit gesondert dargestellten Zylindern 12 auf, wobei in jeder Auslassleitung eines jeden Zylinders 12 unmittelbar nach den nicht dargestellten Auslassventilen Oxidationskatalysatoren 3 angeordnet sind. Diese Bauweise ist möglich, wenn der Dieselmotor 1 konstruktiv für die Anordnung von Oxidationskatalysatoren 3 in den Auslassleitungen ausgelegt ist. Die aus den einzelnen Oxidationskatalysatoren 3 austretenden Abgase gelangen in ein Abgassammelrohr 13, wobei in diesem Fall der geringst mögliche Abstand der Oxidationskatalysatoren 3 mit Bezug auf die aus dem Motor austretenden Abgase gegeben ist. Dementsprechend schnell sprechen die Oxidationskatalysatoren 3a in effizienter Weise nach einem Kaltstart des Dieselmotors 1 an. Vom Abgassammelrohr 13 gelangen die Abgase über ein Abgasrohr 4, das mit einer Wärmeisolierung 14 versehen ist, in den Schalldämpfer 10 und von dort in den Rußpartikelfilter 8 mit darin integrierter Reduktionsmittelzersetzungsvorrichtung 7. Die Reduktionsmitteleinsprühvorrichtung 6 ist so ausgebildet, dass sie das Reduktionsmittel im Wesentlichen koaxial zu einer Mittelachse 15 des Rußpartikelabscheiders 8 einsprüht.

Der Reduktionskatalysator 9 weist in diesem Fall einen ersten Teil 16 auf, der mit einer Hochtemperatur-Katalytbeschichtung versehen ist und einen zweiten Teil 17, der mit einer Niedertemperatur-Katalytbeschichtung versehen ist. Hierdurch wird die Wirksamkeit des Reduktionskatalysators 9 zusätzlich erhöht. Im dargestellten Ausführungsbeispiel besteht der Reduktionskatalysator 9 aus zwei körperlich unterscheidbaren Teilen 16, 17, jedoch ist es auch möglich, eine Zonenbeschichtung mit einem Hochtemperatur- und einem Niedertemperatur-Katalyten auf gemeinsamen Trägerelementen vorzusehen.

Die Wärmeisolierungen 14 der Abgasrohre 2 und 4 können als Außenisolierung aus wärmeisolierendem Material wie Mineralwolle oder dergleichen bestehen. Im Bereich der Reduktionsmitteleinsprühvorrichtung 6 ist bevorzugterweise eine Innenisolierung in Form eines zum Abgasrohr 4 beabstandet angeordneten Innenrohres 18 ausgeführt (vergleiche auch Fig. 4). Dieses Innenrohr 18 ist mit nach außen geprägten Noppen 19 als Abstandhalter versehen, wodurch sich zwischen dem Innenrohr 18 und dem Abgasrohr 4 eine wärmeisolierende, sich wenig bewegende Gasschicht ausbildet. Im Innenrohr 18 kann eine Heizvorrichtung 20 angeordnet sein, die beim dargestellten Ausführungsbeispiel als elektrischer Heizwiderstand ausgebildet ist, der über eine Batterie 21 und einen Schalter 22 wahlweise eine Heizwirkung entfaltet. Diese Heizwirkung wird kontrolliert durch eine nicht dargestellte Motorsteuerung hervorgerufen und nach Erreichen einer vorgegebenen Abgastemperatur wieder abgeschaltet. Insbesondere kann so vermieden werden, dass das eingedüste Reduktionsmittel an der kälteren Wand des Abgasrohres (wieder) kondensiert und/oder sich als Festsoff ablagert.

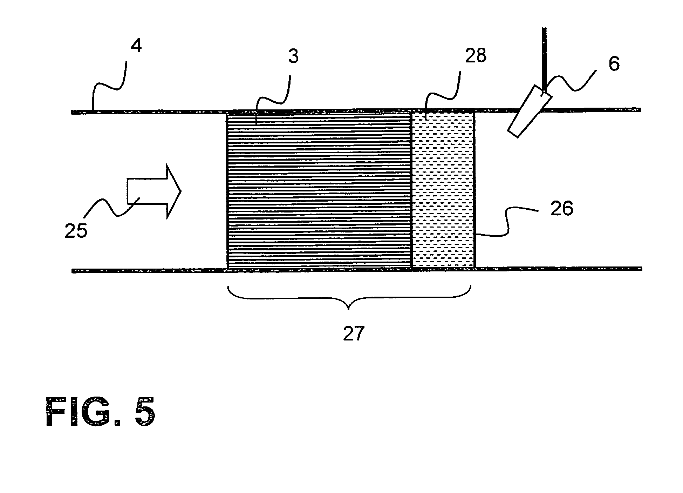

Fig. 5 veranschaulicht nun die Einbausituation, wenn das Reduktionsmittel (gegebenenfalls zusätzlich auch) in das Abgasrohr 4 vor dem (hier nicht dargestellten) Abgasschalldämpfer so eingedüst wird, das es entgegen einer Strömungsrichtung 25 des Abgases die Rückseite 26 des Trägers 27 für den Oxidationskatalysator 3 erreicht. Der Träger 26 - z.B. eine keramische oder metallische Wabenstruktur - kann dabei im rückwärtigen Bereich anschließend zur Rückseite 26 eine Zone 28 aufweisen, die die Umsetzung bzw. Verdampfung des Reduktionsmittels am/im Träger 26 begünstigt. Die Zone 28 kann hierfür frei von einer Beschichtung oder mit einer anderen Beschichtung ausgeführt sein, wie im Bereich des Oxidationskatalysators 3. Bevorzugt ist, dass die Zone 28 einteilig mit dem Träger des Oxidationskatalysators 3 ausgebildet ist, dies ist aber nicht zwingend erforderlich.

Die vorliegende Erfindung ist nicht auf die dargestellten Ausführungsbeispiele beschränkt. Es sind vielmehr zahlreiche Abwandlungen der Erfindung im Rahmen der Patentansprüche möglich.

### Bezugszeichenliste

| | |
|---|---|
| 1 | Dieselmotor |
| 2 | erstes Abgasrohr |
| 3 | Oxidationskatalysator |
| 4 | zweites Abgasrohr |
| 5 | Reduktionsmitteldosiervorrichtung |
| 6 | Reduktionsmitteleinsprühvorrichtung |
| 7 | Reduktionsmittelzersetzungsvorrichtung |
| 8 | Rußpartikelabscheider |
| 9 | Reduktionskatalysator |
| 10 | Schalldämpfer |
| 11 | Auspuffrohr |
| 12 | Zylinder |
| 13 | Abgassammelrohr |
| 14 | Wärmeisolierung |
| 15 | Mittelachse |
| 16 | erster Teil des Reduktionskatalysators |
| 17 | zweiter Teil des Reduktionskatalysators |
| 18 | Isolierung gleich Innenrohr |
| 19 | Noppen |
| 20 | Heizvorrichtung |
| 21 | Batterie |
| 22 | Schalter |
| 23 | Abgasturbolader |
| 24 | Abstand |
| 25 | Strömungsrichtung |
| 26 | Rückseite |
| 27 | Träger |
| 28 | Zone |

## Patentansprüche

1. Dieselmotor (1) für ein Nutzfahrzeug mit einem Abgasreinigungssystem aus einen im Abgasstrang (2, 4, 11) angeordneten Oxidationskatalysator (3), einer Reduktionsmitteldosiervorrichtung (5) mit einer Reduktionsmitteleinsprühvorrichtung (6), einer Reduktionsmittelzersetzungsvorrichtung (7), einem Rußpartikelabscheider (8), einem Reduktionskatalysator (9) und einem Schalldämpfer (10) für die Abgase sowie insbesondere einen Abgasturbolader (23), wobei
- der Oxidationskatalysator (3) zwischen einem minimalen Abstand unmittelbar nach Auslassventilen des Motors (1) und einem maximalen Abstand (24) von 0,75 m von einem Abgassammelrohr (13) oder von einem Auslass des Abgasturboladers (23) angeordnet ist, **dadurch gekennzeichnet, dass**
- die Reduktionsmittelzersetzungsvorrichtung (7), der Rußpartikelabscheider (8) sowie der Reduktionskatalysator (9) davon getrennt in dem Schalldämpfer (10) angeordnet sind.

2. Dieselmotor (1) nach Patentanspruch 1, wobei wenigstens eine Wärmeisolierung (14) bei einer Rohrverbindung (2, 4)
- vom Abgassammelrohr (13) oder, falls ein Abgasturbolader (23) vorgesehen ist, vom Auslass des Abgasturboladers (23) zum Oxidationskatalysator (3), und/oder
- vom Oxidationskatalysator (3) zum Abgasschalldämpfer (10) vorgesehen ist.

3. Dieselmotor (1) nach Patentanspruch 1 oder 2, wobei eine Innenisolierung (18) der Rohrverbindung (2, 4) im Bereich der Reduktionsmitteleinsprühvorrichtung (6) vorgesehen ist.

4. Dieselmotor (1) nach einem der vorhergehenden Patentansprüche, bei dem die Innenisolierung (18) aus einem zur Rohrverbindung (4) beabstandet angeordneten, konzentrischen Innenrohr (18) besteht.

5. Dieselmotor (1) nach einem der vorhergehenden Patentansprüche, bei dem eine aktive Heizvorrichtung (20) vorgesehen ist.

6. Dieselmotor (1) nach einem der vorhergehenden Patentansprüche, wobei wenigstens der Oxidationskatalysator (3), die Reduktionsmittelzersetzungsvorrichtung (7), der Rußpartikelabscheider (8) oder der Reduktionskatalysator (9) einen Katalysatorträger aufweist, der mit einer Washcoat-Beschichtung in einer Menge von 10 bis 16 g/l Katalysatorvolumen versehen ist.

7. Dieselmotor (1) nach einem der vorhergehenden Patentansprüche, wobei das Reduktionsmittel in das Abgasrohr (4) vor dem Abgasschalldämpfer (10) so eindüsbar ist, das es entgegen einer Strömungsrichtung (25) des Abgases eine Rückseite (26) des Trägers (27) für den Oxidationskatalysator (3) erreicht.

## Claims

1. Diesel engine (1) for a utility motor vehicle having an exhaust-gas purification system composed of an oxidation catalytic converter (3) arranged in an exhaust tract (2, 4, 11), a reducing agent dosing device (5) with a reducing agent injection device (6), a reducing agent decomposition device (7), a soot particle separator (8), a reduction catalytic converter (9) and a silencer (10) for exhaust-gases and in particular an exhaust-gas turbocharger (23), wherein the oxidation catalytic converter (3) is arranged between a minimum distance directly downstream of the outlet valves of the engine (1) and a maximum distance (24) of 0,75 m from an exhaust-gas collecting pipe (13) or an outlet of the exhaust-gas turbocharger (23), **characterized in that** the reducing agent decomposition device (7), the soot particle separator (8) and the reduction catalytic converter (9) are arranged separately therefrom in the silencer (10).

2. Diesel engine (1) according to claim 1, wherein at least one thermal insulation (14) is provided at a pipe connection (2, 4)
- from the exhaust-gas collecting pipe (13) or, if an exhaust-gas turbocharger (23) is provided, from the outlet of the exhaust-gas turbocharger (23) to the oxidation catalytic converter (3) and/or
- from the oxidation catalytic converter (3) to the exhaust silencer (10).

3. Diesel engine (1) according to claim 1 or 2, wherein an internal insulation (18) of the pipe connection (2, 4) is provided in the region of the reducing agent injection device (6).

4. Diesel engine (1) according to one of the preceding patent claims, in which the internal insulation (18) is composed of an inner pipe (18) which is arranged at a distance from and concentrically with respect to the pipe connection (4).

5. Diesel engine (1) according to one of the preceding claims, in which an active heating device (20) is provided.

6. Diesel engine (1) according to one of the preceding claims, wherein at least the oxidation catalytic converter (3), the reducing agent decomposition device (7), the soot particle separator (8) or the reduction catalytic converter (9) is provided with a catalyst support, which has a washcoat coating in a quantity of 10 to 16 g/l catalytic converter volume.

7. Diesel engine (1) according to one of the preceding claims, wherein the reducing agent is injected into the exhaust pipe (4) upstream of the exhaust silencer (10) such that it impinges on a rear side (26) of the support (27) for the oxidation catalytic converter (3) counter to a flow direction (25) of the exhaust gas.

## Revendications

1. Moteur diesel (1) pour un véhicule utilitaire, comprenant un système d'épuration des gaz d'échappement constitué d'un catalyseur d'oxydation (3) disposé dans le parcours des gaz d'échappement (2, 4, 11), d'un dispositif de dosage d'agent réducteur (5) avec un dispositif de pulvérisation d'agent réducteur (6), d'un dispositif de décomposition d'agent réducteur (7), d'un séparateur à particules de suie (8), d'un catalyseur de réduction (9) et d'un silencieux (10) pour les gaz d'échappement ainsi que notamment d'un turbocompresseur à gaz d'échappement (23),
- le catalyseur d'oxydation (3) étant disposé entre une distance minimale directement après des soupapes d'échappement du moteur (1) et une distance maximale (24) de 0,75 m d'un collecteur d'échappement (13) ou d'une sortie du turbocompresseur à gaz d'échappement (23), **caractérisé en ce que**
- le dispositif de décomposition d'agent réducteur (7), le séparateur à particules de suie (8) et le catalyseur de réduction (9) sont disposés dans le silencieux (10) de manière séparée de celui-ci.

2. Moteur diesel (1) selon la revendication 1, dans lequel au moins une isolation thermique (14) est prévue au niveau d'une liaison tubulaire (2, 4)
- depuis le collecteur d'échappement (13) ou, au cas où il est prévu un turbocompresseur à gaz d'échappement (23), depuis la sortie du turbocompresseur à gaz d'échappement (23) jusqu'au catalyseur d'oxydation (3) élément, et/ou
- depuis le catalyseur d'oxydation (3) jusqu'au silencieux (10).

3. Moteur diesel (1) selon la revendication 1 ou 2, dans lequel une isolation interne (18) de la conduite tubulaire (2, 4) est prévue dans la région du dispositif de pulvérisation d'agent réducteur (6).

4. Moteur diesel (1) selon l'une quelconque des revendications précédentes, dans lequel l'isolation interne (18) se compose d'un tube interne (18) concentrique disposé à distance de la connexion tubulaire (4).

5. Moteur diesel (1) selon l'une quelconque des revendications précédentes, dans lequel un dispositif de chauffage actif (20) est prévu.

6. Moteur diesel (1) selon l'une quelconque des revendications précédentes, dans lequel au moins le catalyseur d'oxydation (3), le dispositif de décomposition d'agent réducteur (7), le séparateur à particules de suie (8) ou le catalyseur de réduction (9) présentent un support de catalyseur qui est pourvu d'un revêtement de couche de finition dans une quantité de 10 à 16 g/l de volume de catalyseur.

7. Moteur diesel (1) selon l'une quelconque des revendications précédentes, dans lequel l'agent réducteur peut être injecté dans le tuyau d'échappement (4) avant le silencieux (10) de telle sorte qu'un côté arrière (26) du support (27) pour le catalyseur d'oxydation (3) s'étende à l'encontre d'une direction d'écoulement (25) du gaz d'échappement.
